# EUROPEAN PATENT SPECIFICATION

(11) **EP 3 808 954 B1**
(45) Date of publication and mention of the grant of the patent: **07.02.2024**
(21) Application number: 19398012.5
(22) Date of filing: 18.10.2019
(51) Int. Cl.: F02B 29/04, F28F 9/02, F02M 26/32, F02M 26/29, F28D 21/00

(54) **HEAT EXCHANGER**
WÄRMETAUSCHER
ÉCHANGEUR DE CHALEUR

(43) Date of publication of application: 21.04.2021
(73) Proprietor: João de Deus & Filhos, S.A., 2135-113 Samora Correia (PT)
(72) Inventor: Carvalho, João, 2135-113 Samora Correia (PT); Barata, Pedro, 2135-113 Samora Correia (PT); Neves, Luis, 2135-113 Samora Correia (PT); Costa, Ricardo, 2135-113 Samora Correia (PT)
(74) Representative: Vanzini, Christian

(56) References cited:
- EP-A2- 1 061 322
- DE-A1- 10 057 190
- DE-A1-102009 049 483
- DE-U1- 20 307 881
- FR-A1- 2 927 413

## Description

The present invention relates generally to heat exchangers, particularly for automotive applications.

In particular, there are known water cooled charge air coolers (WCACs) composed of a tube and fin stacking that forms a core of the WCAC. WCACs are commonly used in intake systems of internal combustion engines. In these WCACs, a water-based mixture is circulated through a jacket of the WCAC, which is connected to a water circuit. The water-based mixture passing through the jacket is used to cool down a gaseous fluid (air or gaseous mixture) conveyed by the tubes of the WCAC towards the intake system of the internal combustion engine.

Coolant based charge air coolers allow for a more compact design and higher performances, and are therefore being increasingly chosen for modern and future applications.

In conventional charge air coolers there is a problem in that the air enters into the cooler at a very high temperature, heating the core plate to a very high temperature. The coolant enters contact with the core plate creating a hot spot. Very often, this hot spot heats up the coolant to an unacceptable temperature, degrading it.

DE 100 57 190 A1 discloses a heat exchanger comprising a deflection plate/gasket with bridge portions. FR 2 927 413 A1 discloses a heat exchanger comprising a gasket with bridge portions. DE 203 07 881 U1 discloses a heat exchanger comprising an insert piece with bridge portions.

One aim of the invention is to provide a solution that is capable of mitigating the formation of hot spots in the core plate.

Accordingly, the invention proposes a heat exchanger having the features of claim 1.

According to the invention, the formation of hot spots is mitigated by the placement of an insulating material on the inlet core plate. The insulation plate deviates the fluid from the tube walls and insulates the core plate thermally. According to one embodiment, the frame portion of the insulation plate may be formed in one piece with a gasket interposed between the inlet core plate and the inlet header tank. According to an alternative embodiment, the frame portion of the insulation plate may be formed in one piece with the inlet header tank.

The invention is mainly aimed at water cooled charge air coolers, but it can be used similarly on other fluid to fluid heat exchangers.

A preferred, but non-limiting, embodiment of the invention will now be described with reference to the attached drawings, in which:
- Figure 1 is an exploded view showing a heat exchanger according to the invention;
- Figure 2 is a sectioned view taken at a fluid inlet part of the heat exchanger of Figure 1; and
- Figures 3 is a sectioned view taken at a fluid inlet part of a conventional heat exchanger.

A heat exchanger, such as for example a water charge air cooler, is shown in the drawings. The heat exchanger comprises an inlet core plate 11 and an outlet core plate 21, both of metal material, such as for example aluminium. These core plates 11 and 21 are connected in a known way to an inlet header tank 13 and to an outlet header tank 23, respectively, in a fluid-tight manner. The header tank 13 and 23 may be of polymeric material.

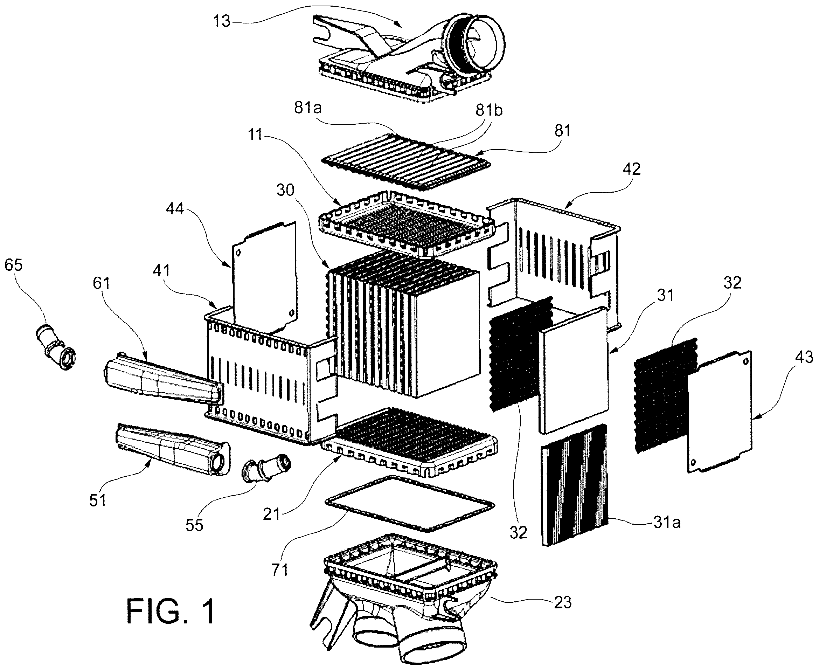

The heat exchanger 1 further comprises a core 30 comprising a plurality of parallel flat tubes 31 extending between the core plates 11 and 21, one of which tubes is also individually shown in Figure 1. The tubes 31 are of metal material, such as for example aluminium. Each tube 31 has opposite ends inserted into openings or slots formed in one or the other of the core plates 11, 21, respectively. Each tube 31 has an approximately rectangular cross-section, and comprises a pair of opposite long sidewalls and a pair of opposite short sidewalls which interconnect the long sidewalls and are shorter than the long sidewalls. Within each tube 31, there is arranged a respective finned plate 31a.

A first fluid, particularly a gaseous fluid such as, for example, air or a gaseous mixture, is designed to flow from the inlet header tank 13 of the heat exchanger, through the fluid connections between the inlet core plate 11 and tubes 31, to the outlet header tank 23 of the heat exchanger, through the fluid connections between the tubes 31 and outlet core plate 21. Through the inlet and outlet header tanks, the heat exchanger can be connected to a fluid circuit for the first fluid (not shown), comprising for example an intake system of an internal combustion engine.

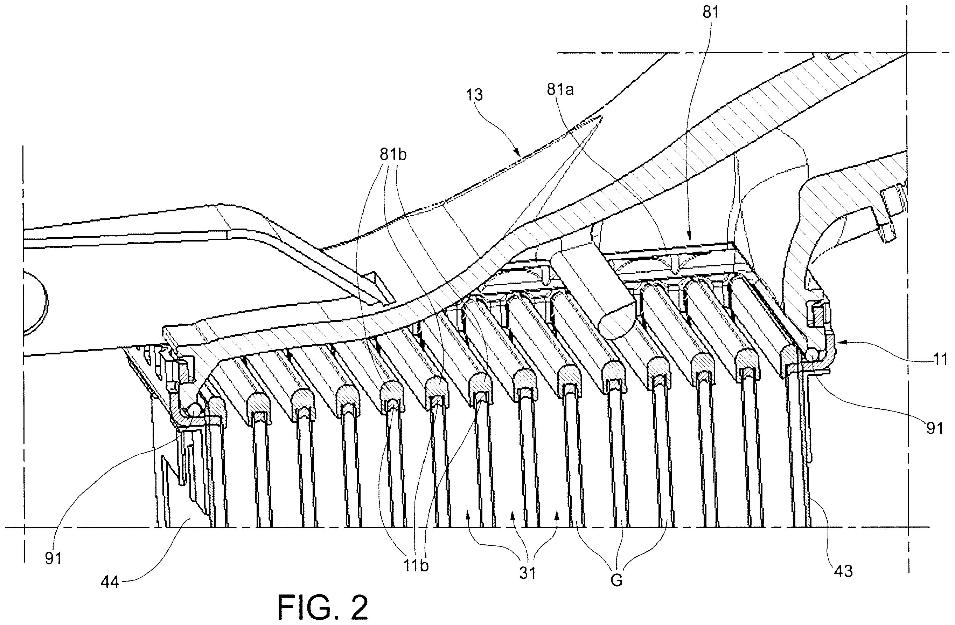

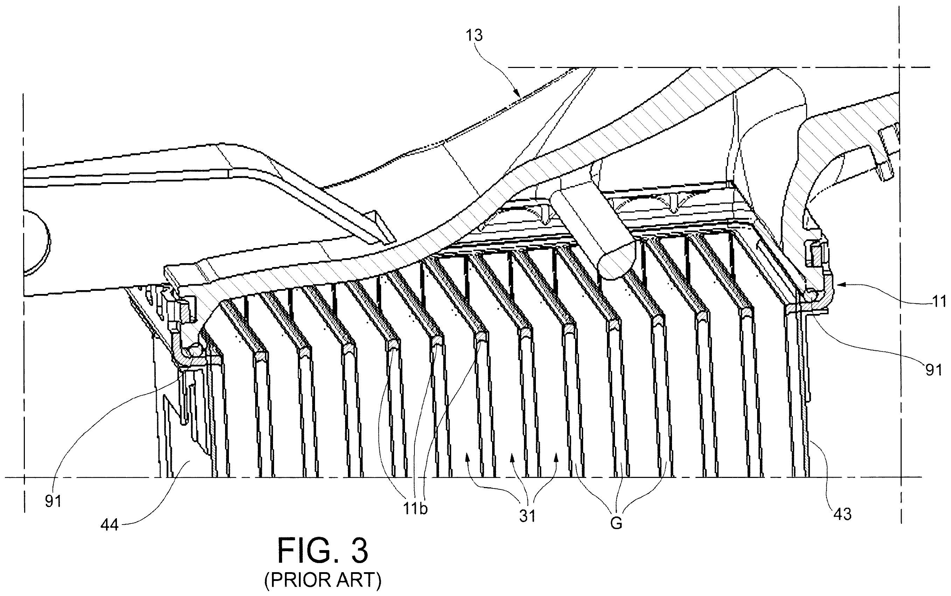

A second fluid, particularly a liquid coolant such as, for example, water or a water-based mixture, is designed to flow around the core 30 and through gaps between the tubes 31, and exchange heat with the first fluid flowing into the tubes 31. Finned plates 32 are arranged into the gaps between the tubes 31, as well as adjacent to tubes 31 at opposite ends of the core 30. For the sake of clarity, finned plates 31a and 32 are not shown in Figures 2 and 3.

The heat exchanger further comprises a jacket of metal material, such as for example aluminium. The jacket is connected to the core plates 11 and 21 in a fluid-tight manner and defines with the core plates 11 and 21 an inner volume for receiving/conveying the second fluid. The tubes 31 are placed within this inner volume formed by the jacket and the core plates 11 and 21.

In the embodiment shown in the drawings, the jacket has a rectangular cross-section and comprises a pair of opposite jacket plates 41 and 42 and a pair of opposite side plates 43 and 44 to which the jacket plates 41 and 42 are connected.

The heat exchanger further comprises an inlet fluid channel 51 and an outlet fluid channel 61 for conveying the second fluid to and from the inner volume formed by the jacket along with the core plates 11, 21. Both fluid channels 51, 61 are of metal material, such as for example aluminium. Each fluid channel 51, 61 is joined to a wall of the jacket. In the example shown in the drawings, both fluid channels 51, 61 are joined to one of the jacket plates referenced with 41. In the example shown in the drawings, each fluid channel 51, 61 is formed as an elongate, concave shell, whose rim is joined to the jacket plate.

Each fluid channel 51, 61 is in fluid communication with the inner volume of the jacket through a respective opening 53, 63 formed through the wall 41 of the jacket.

Figure 1 also shows inlet and outlet fluid connectors, 55 and 65, which are fixed to the inlet fluid channel 51 and the outlet fluid channel 61, respectively, to connect the heat exchanger to a fluid circuit for the second fluid (not shown), such as for example a liquid coolant circuit.

According to an embodiment, the tubes 31, core plates 11 and 21, and jacket are joined to each other, fluid channels 51 and 61 are joined to the jacket, and connectors 55 and 65 are joined to the fluid channels 51 and 61 in a conventional manner, particularly by brazing. The inlet and outlet header tank 13 and 23 are joined to the core plates 11 and 21 in a conventional manner, particularly by crimping. Figure 1 also shows a gasket 71 which is interposed between the outlet core plate 21 and the outlet header tank 23.

With reference to Figure 2, an insulation plate 81 of thermally insulating material is arranged on the inlet core plate 11, between the inlet core plate 11 and the inlet header tank 13. The insulation plate is forms as a one-piece body of polymeric material, such as for example rubber or plastics. The insulation plate 81 comprises a frame portion 81a and a plurality of bridge portions 81b extending between opposite sides of the frame portion 81a. Each bridge portion 81b covers a respective area 11b of the inlet core plate 11 between adjacent tubes 31. Under areas 11b, there are arranged gaps G into which the second fluid is intended to flow. When viewed in cross-section, each bridge portion 81b is approximately C-shaped or U-shaped and surrounds the respective area 11b of the inlet core plate 11 and respective walls of the tubes 31 adjoining said area 11b. Based on the above arrangement, the insulation plate 81 deviates the first fluid from the tube walls and insulates the inlet core plate thermally; therefore, the formation of hot spots is mitigated. For comparison, a conventional heat exchanger without insulation plate is shown in Figure 3. Elements corresponding to those of the heat exchanger of Figure 2 have been designated with the same reference numbers.

According to the embodiment shown in the drawings, the frame portion 81a of the insulation plate 81 is formed in one piece with a gasket 91 interposed between the inlet core plate 11 and the inlet header tank 13.

According to an alternative embodiment, not shown, the frame portion 81a of the insulation plate 81 may be formed in one piece with the inlet header tank 13.

## Claims

1. A heat exchanger comprising:
a plurality of parallel tubes (31) for conveying a fluid,
inlet and outlet core plates (11, 21), each having a plurality of openings into which respective ends of the tubes are inserted in a fluid-tight manner, and
inlet and outlet header tanks (13, 23) joined to the inlet and outlet core plates (11, 21), respectively, in a fluid-tight manner, said inlet and outlet header tanks cooperating with the inlet and outlet core plates to form a fluid inlet chamber and a fluid outlet chamber, respectively,
wherein an insulation plate (81) of thermally insulating material is arranged on the inlet core plate (11), said insulation plate comprising a frame portion (81a) and a plurality of bridge portions (81b) extending between opposite sides of the frame portion (81a), each of said bridge portions covering a respective area (11b) of the inlet core plate (11) between adjacent tubes (31), when viewed in cross-section, each of said bridge portions (81b) is approximately C-shaped or U-shaped,
**characterized in that**, when viewed in cross-section, each of said bridge portions (81b) surrounds the respective area (11b) of the inlet core plate (11) and respective walls of the tubes (31) adjoining said area.

2. A heat exchanger according to claim 1, wherein the insulation plate (81) is of polymeric material.

3. A heat exchanger according to any of clams 1 to 2, wherein the frame portion (81a) of the insulation plate (81) is formed in one piece with a gasket (91) interposed between the inlet core plate (11) and the inlet header tank (13).

4. A heat exchanger according to any of claims 1 to 2, wherein the frame portion (81a) of the insulation plate (81) is formed in one piece with the inlet header tank (13).

## Patentansprüche

1. Wärmetauscher, aufweisend:
eine Mehrzahl von parallelen Röhren (31) zum Transportieren einer Flüssigkeit,
Einlass- und Auslasskernplatten (11, 21), die jeweils eine Mehrzahl von Öffnungen aufweisen, in die jeweilige Enden der Röhren in flüssigkeitsdichter Weise eingeführt sind, und
Einlass- und Auslass-Sammeltanks (13, 23), die mit den Einlass- bzw. Auslasskernplatten (11, 21) in flüssigkeitsdichter Weise verbunden sind, wobei die Einlass- und Auslass-Sammeltanks mit den Einlass- und Auslasskernplatten zusammenwirken, um eine Flüssigkeitseinlasskammer bzw. eine Flüssigkeitsauslasskammer zu bilden,
wobei eine Isolierplatte (81) aus thermisch isolierendem Material auf der Einlasskernplatte (11) angeordnet ist, wobei die Isolierplatte einen Rahmenbereich (81a) und eine Mehrzahl von sich zwischen entgegengesetzten Seiten des Rahmenbereichs (81a) erstreckenden Brückenbereichen (81b) aufweisen, wobei jeder der Brückenbereiche einen jeweiligen Bereich (11b) der Einlasskernplatte (11) zwischen benachbarten Röhren (31) abdeckt, wobei jeder der Brückenbereiche (81b) im Querschnitt betrachtet ungefähr C-förmig oder U-förmig ist,
**dadurch gekennzeichnet, dass** bei Betrachtung im Querschnitt jeder der Brückenbereiche (81b) den jeweiligen Bereich (11b) der Einlasskernplatte (11) und jeweilige Wände der an diesen Bereich angrenzenden Röhren (31) umschließt.

2. Wärmetauscher nach Anspruch 1, wobei die Isolierplatte (81) aus polymerem Material ist.

3. Wärmetauscher nach einem der Ansprüche 1 oder 2, wobei der Rahmenbereich (81a) der Isolierplatte (81) in einem Stück mit einer zwischen der Einlasskernplatte (11) und dem Einlass-Sammeltank (13) befindlichen Dichtung (91) ausgebildet ist.

4. Wärmetauscher nach einem der Ansprüche 1 oder 2, wobei der Rahmenbereich (81a) der Isolierplatte (81) in einem Stück mit dem Einlass-Sammeltank (13) ausgebildet ist.

## Revendications

1. Échangeur de chaleur comprenant :
une pluralité de tubes parallèles (31) pour transporter un fluide,
des plaques centrales d'entrée et de sortie (11, 21), chacune ayant une pluralité d'ouvertures dans lesquelles des extrémités respectives des tubes sont insérées de manière étanche aux fluides, et
des réservoirs collecteurs d'entrée et de sortie (13, 23) assemblés aux plaques centrales d'entrée et de sortie (11, 21), respectivement, de manière étanche aux fluides, lesdits réservoirs collecteurs d'entrée et de sortie coopérant avec les plaques centrales d'entrée et de sortie pour former respectivement une chambre d'entrée de fluide et une chambre de sortie de fluide,
dans lequel une plaque d'isolation (81) en matériau thermiquement isolant est disposée sur la plaque centrale d'entrée (11), ladite plaque d'isolation comprenant une partie de cadre (81a) et une pluralité de parties de pont (81b) s'étendant entre des côtés opposés de la partie de cadre (81a), chacune desdites parties de pont couvrant une zone respective (11b) de la plaque centrale d'entrée (11) entre des tubes adjacents (31), lorsqu'elle est vue en coupe transversale, chacune desdites parties de pont (81b) a approximativement une forme de C ou une forme de U,
**caractérisé en ce que**, lorsqu'elle est vue en coupe transversale, chacune desdites parties de pont (81b) entoure la zone respective (11b) de la plaque centrale d'entrée (11) et des parois respectives des tubes (31) attenantes à ladite zone.

2. Échangeur de chaleur selon la revendication 1, dans lequel la plaque d'isolation (81) est en matériau polymère.

3. Échangeur de chaleur selon l'une quelconque des revendications 1 et 2, dans lequel la partie de cadre (81a) de la plaque d'isolation (81) est formée d'un seul tenant avec un joint (91) interposé entre la plaque centrale d'entrée (11) et le réservoir collecteur d'entrée (13).

4. Échangeur de chaleur selon l'une quelconque des revendications 1 et 2, dans lequel la partie de cadre (81a) de la plaque d'isolation (81) est formée d'un seul tenant avec le réservoir collecteur d'entrée (13).
